# EUROPÄISCHE PATENTANMELDUNG

(11) **EP 1 555 532 A2**
(43) Veröffentlichungstag der Anmeldung: **20.07.2005**
(21) Anmeldenummer: 04029266.6
(22) Anmeldetag: 10.12.2004
(51) Int. Cl.: G01P 15/18, G01P 1/02

(54) **Vorrichtung zur Beschleunigungsmessung in Raumflugkörpern**

(30) Priorität: 17.01.2004 DE 102004002543
(71) Anmelder: EADS Space Transportation GmbH, 28199 Bremen (DE)
(72) Erfinder: Retat, Ingo, Dr., 28832 Achim (DE); Schlossstein, Uwe, 28307 Bremen (DE); Schütte, Andreas, 27299 Etelsen (DE)
(74) Vertreter: Hansmann, Dierk, Dipl.-Ing.

(57) **Zusammenfassung**

Eine Vorrichtung zur Beschleunigungsmessung besteht aus Beschleunigungssensoren für drei voneinander unabhängige Richtungen des Raumes, die in ein Gehäuse integriert und mit einer Meßdatenerfassungseinheit zu einer mobilen Einheit zur Messung von Beschleunigungen verbunden sind, wobei die Meßdatenerfassungseinheit aus einem Notebook-Computer besteht. Im Gehäuse ist zusätzlich eine Sensoreinheit zur Messung der Temperatur der Beschleunigungssensoren angeordnet, die für eine Kompensation der thermischen Nullpunkts-Drift der Beschleunigungssensoren einsetzbar ist. Die Vorrichtung kann für die Messung von Restbeschleunigungen in einer Raumstation eingesetzt werden, sie kann aber auch für die Messung der Schallfortpflanzung in Gebäuden und zur Messung von Beschleunigungen verwendet werden, die beim Einschlag von Mikro-Meteoriten in die Außenwände von Raumfahrzeugen auftreten.

## Beschreibung

Die Erfindung betrifft eine Vorrichtung für Raumflugkörper zur Beschleunigungsmessung für eine Bewertung der Schwerelosigkeit mit Beschleunigungssensoren für drei voneinander unabhängige Richtungen des Raumes, die in einem Gehäuse integriert und mit einer Meßdatenerfassungseinheit zu einer mobilen Einheit zur Messung von Beschleunigungen verbunden sind.

In Raumflugkörpern, wie beispielsweise der Internationalen Raumstation (ISS), sollen häufig wissenschaftliche Experimente unter den Bedingungen der Schwerelosigkeit durchgeführt werden. Bedingt durch Störungen, wie Lageregelungsvorgänge, Ventilatoren, Pumpen etc., wird jedoch eine vollkommene Schwerelosigkeit - d.h. eine Beschleunigung identisch Null - praktisch nie erreicht. Für die in bzw. mit der Raumstation arbeitenden Wissenschaftler ist es indes wichtig, jederzeit zu wissen, wie hoch der Störpegel - gemessen direkt am Versuchsaufbau während der Messung - tatsächlich ist, um die Ergebnisse richtig bewerten zu können und um reale Effekte von Störeffekten unterscheiden zu können. Daher ist in der Internationalen Raumstation ein Meßsystem vorgesehen, das die Restbeschleunigung, oft auch als µg-Level bezeichnet, registriert und als Information bereitstellt. Dieses bekannte Meßsystem hat jedoch eine beträchtliche Größe und erfordert entsprechende Ressourcen.

Daneben ist in der DE 198 32 341 Al ein Verfahren zum Erfassen von Beschleunigungswerten in drei Raumachsen während des Transports eines Behälters oder einer Ware beschrieben, das durch eine Vorrichtung der eingangs genannten Art realisiert wird. Bei dieser bekannten Anordnung handelt es sich im Prinzip um ein Meßdatenerfassungs- und aufzeichnungssystem nach Art eines sogenannten Dataloggers, in dem die während des Transportes erfaßten Daten zwischengespeichert werden, um zu einem späteren Zeitpunkt über einen PC ausgelesen zu werden. Eine solche Anordnung ist nicht geeignet, in einer Raumstation während eines Experimentes die Restbeschleunigung zu registrieren und unmittelbar als Information bereitzustellen.

Der Erfindung liegt die Aufgabe zugrunde, eine derartige Vorrichtung so auszubilden, daß sie ein möglichst kompaktes System zur Messung der Restbeschleunigung bildet, das keine weiteren Ressourcen, wie z.B. eine externe Stromversorgung, benötigt und mit dem auf einfache Weise überall dort eine exakte Information über die herrschende Restbeschleunigung möglich ist, wo ein Experiment durchgeführt wird.

Die Erfindung löst diese Aufgabe dadurch, daß die Meßdatenerfassungseinheit aus einem Notebook-Computer besteht und daß in das Gehäuse eine Filtereinheit für die Vorfilterung der Meßsignale integriert ist.

Die erfindungsgemäße Vorrichtung bildet damit ein komplettes Beschleunigungsinformationssystem, das besonders klein ist und das direkt mit einem Notebook-Computer zusammenarbeit. Die erfindungsgemäße Vorrichtung ist zwar bevorzugt für eine Anwendung in der Raumfahrt konzipiert, sie kann aber überall dort eingesetzt werden, wo Beschleunigungen schnell, einfach und mobil gemessen werden sollen.

Bei der bevorzugten Ausführungsform der Erfindung ist in vorteilhafter Weiterbildung der Erfindung vorgesehen, daß das Gehäuse durch eine Stromversorgungseinheit in zwei Bereiche eingeteilt wird, die elektromagnetisch gegeneinander abgeschirmt sind, und daß der Aufbau einerseits Beschleunigungsmessungen bis zu 200 Hz zuläßt und andererseits äußerst kompakt aufgebaut ist. Die Stromversorgung kann dabei über eine PCMCIA-Meßkarte, eine PC-Meßkarte oder aber über eine USB-Schnittstelle des Notebook-Computers erfolgen. Ferner erfolgt in vorteilhafter Weise eine weitere digitale Filterung des Signals im Notebook-Computer selbst.

Nachfolgend soll die Erfindung anhand eines in der Zeichnung dargestellten Ausführungsbeispiels näher erläutert werden. Es zeigen
- Fig. 1: in schematischer Weise den Aufbau einer Vorrichtung zur Beschleunigungsmessung und
- Fig. 2: den Aufbau der Sensoreinheit bei der Vorrichtung gemäß Fig. 1.

Die in den Figuren dargestellte Vorrichtung zur Beschleunigungsmessung besteht im wesentlichen aus einer in einem Gehäuse 1 angeordneten Sensoreinheit mit Beschleunigungsaufnehmern sowie mit Komponenten für eine Filterung und Aufbereitung der Signale und aus einer mit dieser Sensoreinheit verbundenen Einheit 2 für die Meßdatenerfassung und Digitalisierung sowie zur Signalaufbereitung und der Darstellung und verarbeitung der Meßergebnisse.

Im Gehäuse 1 sind insgesamt drei Beschleunigungssensoren 3 bis 5 für die drei Raumrichtungen sowie eine Sensoreinheit 6 zur Temperaturmessung angeordnet. Die Meßsignale der Beschleunigungssensoren 3 bis 5 werden in einer nachgeschalteten Filtereinheit 7 gefiltert und an eine in der Meßdatenerfassungseinheit 2, im Fall des hier beschriebenen Ausführungsbeispiels einem Notebook-Computer, angeordnete Meßkarte 8 übermittelt. In dieser Meßkarte 8 werden die Signale verstärkt und digitalisiert, wobei die Filtereinheit 7 die Bandbreite der Meßsignale beschränkt und auf diese Weise eine Überlastung der Meßkarte 8 mit unerwünschten Signalen verhindert.

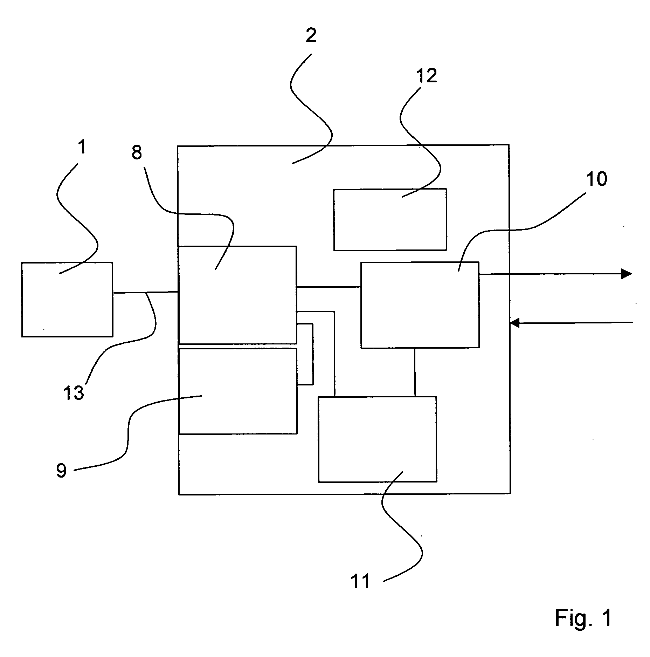

Die digitalen Signale werden in einer der Meßkarte 8 zugeordneten Speichereinheit 9 zwischengespeichert und anschließend mittels einer Signalverarbeitungseinheit 10 nochmals gefiltert und dann weiterverarbeitet, z.B. wird eine Fast-Fourier-Transformation durchgeführt. Die Filterparameter sowie weitere verarbeitungsparameter können über eine entsprechende Software per Menü verändert werden. Störquellen, wie sie beispielsweise in der ISS auftreten, können so durch die Anpassung der digitalen Filter leichter identifiziert werden. Anschließend werden die so erzeugten Daten auf einer Anzeigeeinheit 11 zur Darstellung gebracht und/oder auf einem Datenträger, in diesem Fall einer internen Harddisk 12, abgespeichert. Zusätzlich können die Daten, wie in Fig. 1 durch Pfeile angedeutet, über eine externe Datenleitung weitergeleitet werden, über die auch die entsprechenden Befehle an die Meßdatenerfassungseinheit 2 übermittelt werden können.

Die in den Figuren dargestellte Vorrichtung zur Beschleunigungsmessung benötigt keine weiteren Verstärker oder andere Elektronik und weist einen sehr geringen Strombedarf auf, so daß sowohl für die Meßdatenerfassungseinheit 2 als auch insbesondere für die im Gehäuse 1 angeordneten Beschleunigungsaufnehmer 3 bis 5, den Temperatursensor 6 sowie die Filtereinheit 7 keine externe Stromversorgung erforderlich ist. Vielmehr werden diese Komponenten über die Meßkarte 8 im Computer sowie das Verbindungskabel 13 mit einer 5 Volt Gleichspannung versorgt, die dann im Inneren des Gehäuses 1 geeignet aufbereitet wird.

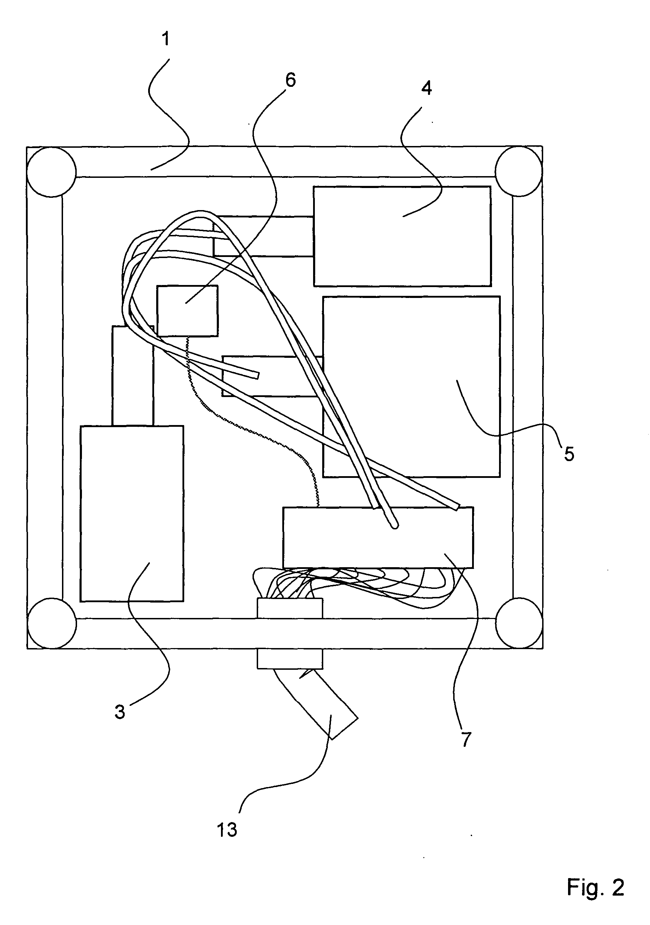

Hierzu ist dieses Gehäuse 1 in zwei Bereiche unterteilt; in einem Teil ist die Spannungsaufbereitung untergebracht, in der die vom Notebook gelieferte 5 Volt Gleichspannung mit einem DC/DC Konverter auf ± 12 Volt transformiert und gefiltert wird. Der andere, in Fig. 2 dargestellte Teil des Gehäuses 1 ist durch eine massive Schottwand von der Meßelektronik getrennt, wobei diese Schottwand durch die Aufnahme der DC/DC-Konverter-Einheit gebildet wird. Auf diese Weise wird verhindert, daß die Signale der Meßaufnehmer durch den DC/DC-Konverter gestört werden. Die Meßaufnehmer selbst sind dabei einerseits so in dem massiven Gehäuse angeordnet, daß für alle drei Raumrichtungen die Eigenfrequenzen des Systems wesentlich größer als 200 Hz sind und damit Beschleunigungsmessungen bis zu 200 Hz möglich sind. Andererseits ist die Anordnung der Sensoren und der Filterplatine derart komprimiert, daß eine äußerst kompakte Bauweise möglich ist.

Die Benutzung der Vorrichtung ist für einen Astronauten oder anderen Anwender äußerst einfach: Die Meßkarte wird in den Notebook-Computer geschoben und an das verbindungskabel 13 angeschlossen. Der Computer wird eingeschaltet und die Software wird von einer CD-Rom gestartet. Danach beginnt automatisch die Datenakquisition. Die Temperatur der Beschleunigungssensoren 3 bis 5 wird gemessen und damit eine thermische Nullpunkts-Drift der Beschleunigungssensoren 3 bis 5 kompensiert.

Das komplette System wiegt im Fall des hier beschriebenen Ausführungsbeispiels nicht mehr als ca. 500 Gramm, ist etwa 80 x 80 x 64 mm³ groß und bildet zusammen mit dem Notebook-Computer eine universelle, mobile Einheit zur Messung von Beschleunigungen. Die gesamte Einheit kann auf ein Standard-Lochraster geschraubt werden, die elektrische Verlustwärme kann ohne weitere Maßnahmen passiv abgeführt werden.

Die Sensoren können vorzugsweise für die Messung von kleinen Restbeschleunigungen in einer Raumstation eingesetzt werden, die Vorrichtung kann aber auch für die Messung der Schallfortpflanzung in Gebäuden eingesetzt werden. Daneben können aber auch die Beschleunigungen gemessen werden, die beim Einschlag von Mikro-Meteoriten in die Außenwände von Raumfahrzeugen auftreten.

## Patentansprüche

1. Vorrichtung für Raumflugkörper zur Beschleunigungsmessung für eine Bewertung der Schwerelosigkeit mit Beschleunigungssensoren für drei voneinander unabhängige Richtungen des Raumes, die in einem Gehäuse integriert und mit einer Meßdatenerfassungseinheit zu einer mobilen Einheit zur Messung von Beschleunigungen verbunden sind, **dadurch gekennzeichnet, daß** die Meßdatenerfassungseinheit (2) aus einem Notebook-Computer besteht und daß in das Gehäuse (1) eine Filtereinheit (7) für die Vorfilterung der Meßsignale integriert ist.

2. Vorrichtung nach Anspruche 1, **dadurch gekennzeichnet, daß** das Gehäuse (1) durch eine Stromversorgungseinheit in zwei Bereiche unterteilt wird, die elektromagnetisch gegeneinander abgeschirmt sind.

3. Vorrichtung nach Anspruche 1 oder 2, **dadurch gekennzeichnet, daß** die Stromversorgung über eine PCMCIA-Meßkarte erfolgt.

4. Vorrichtung nach einem der Ansprüche 1 oder 2, **dadurch gekennzeichnet, daß** die Stromversorgung über eine PC-Meßkarte erfolgt.

5. Vorrichtung nach einem der Ansprüche 1 oder 2, **dadurch gekennzeichnet, daß** die Stromversorgung über eine USB-Schnittstelle des Notebook-Computers erfolgt.

6. Vorrichtung nach einem der Ansprüche 1 bis 5, **dadurch gekennzeichnet, daß** in der Meßdatenerfassungseinheit (2) eine Signalverarbeitungseinheit (10) zur digitalen Filterung der Signale vorgesehen ist.

7. Vorrichtung nach Anspruch 6, **dadurch gekennzeichnet, daß** die Filterparameter über ein Menü im Notebook-Computer auswählbar sind.

8. Vorrichtung nach einem der Ansprüche 1 bis 7, **dadurch gekennzeichnet, daß** die Einheit auf ein Standard-Lochraster schraubbar ist.

9. Vorrichtung nach einem der Ansprüche 1 bis 8, **dadurch gekennzeichnet, daß** im Gehäuse (1) eine Sensoreinheit (6) zur Messung der Temperatur der Beschleunigungssensoren (3-5) angeordnet und für eine Kompensation der thermischen Nullpunkt-Drift der Beschleunigungssensoren (3-5) einsetzbar ist.

10. Vorrichtung nach einem der Ansprüche 1 bis 9, **dadurch gekennzeichnet, daß** sie für die Messung der Schallfortpflanzung in Gebäuden einsetzbar ist.

11. Vorrichtung nach einem der Ansprüche 1 bis 9, **dadurch gekennzeichnet, daß** sie für die Messung der Beschleunigungen beim Einschlag von Mikro-Meteoriten in die Außenwände von Raumfahrzeugen einsetzbar ist.
